# EUROPEAN PATENT APPLICATION

(11) **EP 2 434 447 A1**
(43) Date of publication of application: **28.03.2012**
(21) Application number: 11181850.6
(22) Date of filing: 19.09.2011
(51) Int. Cl.: G06Q 30/00, G06Q 10/00

(54) **System and method for effectively providing targeted information to a user community**

(30) Priority: 23.09.2010 US 924235
(71) Applicant: Sony Corporation, Tokyo 108-0075 (JP)
(72) Inventor: Smith, Tim, Carlsbad, CA California 92011 (US); Loughery III, Donald L., Long Beach, CA California 90803 (US); Frazier, Milton, San Marcos, CA California 92069 (US); Rainier, Rajiv, San Diego, CA California 92127 (US); Jacobs, Stephen, Ardsley, NY New York 10022 (US); Noronha, Austin, Sunnyvale, CA California 94086 (US)
(74) Representative: McGowan, Cathrine

(57) **Abstract**

A system for implementing an information distribution network includes an information service that is configured to provide information distribution services through the information distribution network. User devices are utilized by device users to communicate with the information service for receiving the information distribution services. A subset of the device users is defined to form a user community with corresponding ones of the user devices. The community members of the defined user community may generate feedback metadata regarding advertisements that are received from the information service. The information service may then effectively utilize the feedback metadata to accurately target future advertisements to community members of the user community.

## Description

### BACKGROUND SECTION

### 1. Field of the Invention

This invention relates generally to techniques for distributing electronic information, and relates more particularly to a system and method for effectively providing targeted information to a user community.

### 2. Description of the Background Art

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

### SUMMARY

Aspects of the invention are set out in the appended claims.

In accordance with the present invention, a system and method for effectively providing targeted information to a user community are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, user communities, and respective advertisers from an information service. In addition, the transport structures may also be utilized to provide links to targeted advertisements and/or electronic content to appropriate user devices.

In certain embodiments, a user community in an information distribution network may be initially defined by using any effective techniques. For example, in certain embodiments, members of a given user community may be expressly designated by one or more device users. In addition, in other embodiments, a user community may be automatically defined by analyzing relevant device user information. For example, selection factors such as common device user characteristics and behavior may be monitored and analyzed to define a given user community.

An information service may then analyze collected metadata to prepare and send an advertisement to a target user of a corresponding user device. In certain embodiments, the information service or other appropriate entity may also provide recommendations indicating which other members of the user community are likely to find the advertisement relevant. The device user then receives and views the transmitted advertisement. In accordance with the present invention, the device user may utilize a user feedback interface or other appropriate means to generate feedback metadata regarding the viewed advertisement. The user feedback interface may be presented on a display of a corresponding user device or any other appropriate entity.

In certain embodiments, the user feedback interface may include a basic feedback window that has a positive feedback button and a negative feedback button. After viewing a particular advertisement, the target user may select the positive feedback button to indicate a positive impression regarding the advertisement. Similarly, the device user may select the negative feedback button to indicate a negative impression regarding the advertisement. In certain embodiments, the basic feedback window may provide a ranked range of positive or negative feedback (for example, ranging from a low score of 1 to a high score of 10).

In certain embodiments, the user feedback interface also includes a member selection window with a selected member list comprised of a series of members from the user community. The member list may be created in any effective manner. For example, the member list may be implemented as a default buddy list that is specifically created by the device user. Alternately, the member list may be automatically created in accordance with recommendation metadata that is provided by a community manager or any other appropriate entity after analyzing various relevant types of metadata pertaining to members of the user community. The target user may then select one or more community members to generate feedback metadata that specifically indicates which of the listed community members are likely to find a particular advertisement relevant.

The generated feedback metadata may then be incorporated into other relevant metadata (such as user metadata, device metadata, and advertiser metadata) to more accurately and effectively provide future advertisements to the target user and other members of the corresponding user community. For at least the foregoing reasons, the present invention therefore provides an improved system and method for effectively providing targeted information to a user community.

### BRIEF DESCRIPTION OF THE DRAWINGS

Embodiments of the invention will now be described with reference to the accompanying drawings, throughout which like parts are referred to by like references, and in which:
FIG. 1A is a block diagram of a distribution system, in accordance with one embodiment of the present invention;
FIG. 1B is a block diagram of a user community, in accordance with one embodiment of the present invention;
FIG. 2A is a block diagram for one embodiment of a transport structure, in accordance with the present invention;
FIG. 2B is a block diagram for one embodiment of a media file, in accordance with the present invention;
FIG. 3 is a block diagram for one embodiment of a user device from FIG. 1A, in accordance with the present invention;
FIG. 4 is a block diagram for one embodiment of the user memory from FIG. 3, in accordance with the present invention;
FIG. 5 is a block diagram for one embodiment of the information service from FIG. 1A, in accordance with the present invention;
FIG. 6A is a block diagram for one embodiment of the transport server from FIG. 5, in accordance with the present invention;
FIG. 6B is a block diagram for one embodiment of the transport server memory from FIG. 6A, in accordance with the present invention;
FIG. 7 is a block diagram for one embodiment of the ad server from FIG. 5, in accordance with the present invention; and
FIG. 8 is an exemplary user feedback interface, in accordance with one embodiment of the present invention.

### DETAILED DESCRIPTION

The present invention relates to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the wildest scope defined by the appended claims and consistent with the principles and features described herein.

The present invention comprises a system and method for implementing an information distribution network, and includes an information service that is configured to provide information distribution services through the information distribution network. User devices are utilized by device users to communicate with the information service for receiving the information distribution service. A subset of the device users is defined to form a user community with corresponding ones of the user devices. The community members of the defined user community may generate feedback metadata regarding advertisements that are received from the information service. The information service may then effectively utilize the feedback metadata to accurately target future advertisements to community members of the user community.

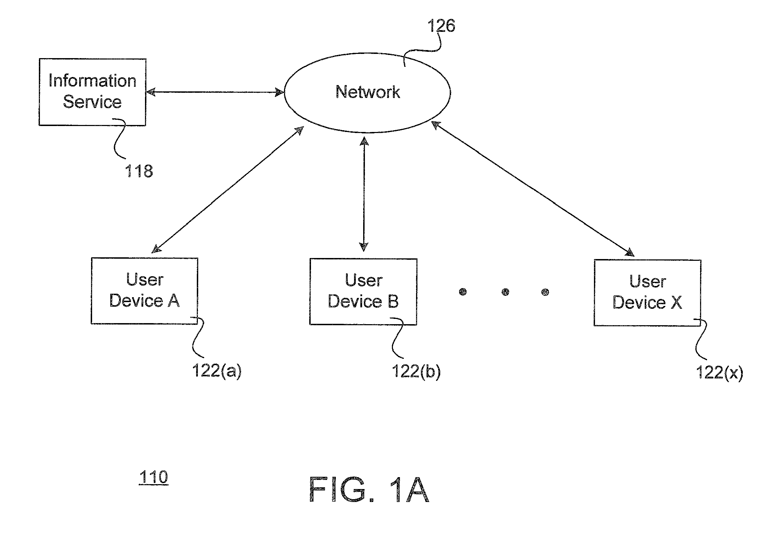

Referring now to FIG. 1A, a block diagram of a distribution system 110 is shown, in accordance with one embodiment of the present invention. In the FIG. 1A embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1A embodiment.

In accordance with the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1A distribution system 110 supports a "push" model that automatically selects and transmits appropriate advertising information to targeted device users based upon corresponding metadata that defines the device users and the various advertisers, and may also represent one or more user communities.

In the FIG. 1A embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118.

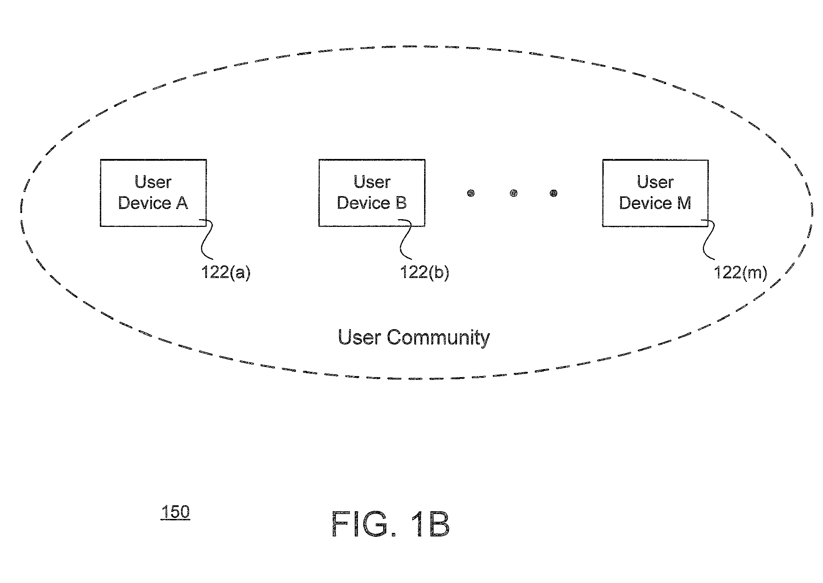

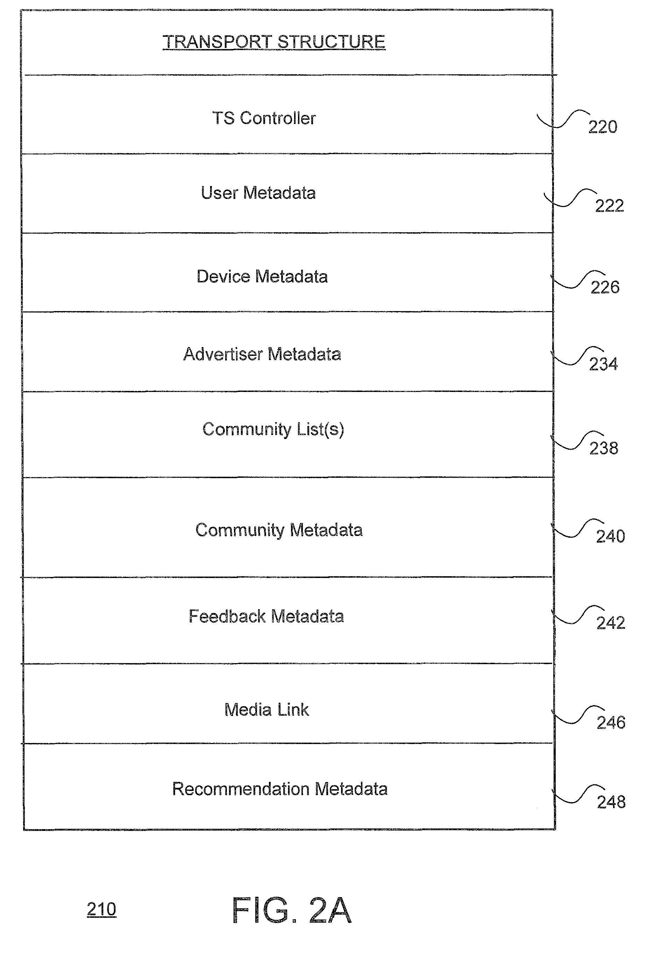

In certain embodiments, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, user communities (see FIG. 1B), and respective advertisers from information service 118. In addition, the transport structures may also be utilized to transport or provide links to targeted advertisements and/or electronic content for appropriate user devices 122.

in accordance with the present invention, one or more user communities may be defined in any appropriate manner. Community members may then provide appropriate user feedback information regarding certain advertisements received from the information service 118. The user feedback information may advantageously be utilized to more accurately target additional advertising to members of the respective user communities. The present invention thus proves an improved system and method for effectively providing targeted information to a user community. Further details regarding the implementation and utilization of transport structures in the FIG. 1A distribution system 110 are discussed below in conjunction with FIGS. 1B-8.

Referring now to FIG. 1B, a block diagram of a user community 150 is shown, in accordance with one embodiment of the present invention. In the FIG. 1B embodiment, user community 150 may include, but is not limited to, one or more device users and their corresponding user devices122(a) through 122(m). In FIG. 1B, the user devices 122 may be the same or similar to correspondingly-numbered user devices 122(a) through 122(m) from FIG. 1A.

The FIG. 1B user community 150 is presented for purposes of illustration, and in alternate embodiments, user communities 150 may be implemented by utilizing components and configurations in addition to, or instead of, certain of those components and configurations discussed in conjunction with the FIG. 1B embodiment. For example, any desired number or type of user devices 122 may be utilized by corresponding device users to form user community 150.

In the FIG. 1B embodiment, user community 150 may be defined or created by utilizing any effective means. For example, in certain embodiments, becoming a member of a user community 150 may require a formal registration procedure. In alternate embodiments, members of a given user community 150 may be expressly designated by one or more device users. In addition, in certain embodiments, a user community 150 may be automatically defined by analyzing relevant device user information. For example, selection factors such as device user characteristics and behavior may be monitored and analyzed to define a given user community 150.

In the FIG. 1B embodiment, relevant community metadata may be collected from respective members of user community 150. The community metadata may then be utilized to generate recommendations for potential advertising that given community members might wish to receive due to common interests with other members of user community 150. The present invention thus provides techniques by which information/metadata collected from trusted members of user community 150 may be continuously collected, analyzed, warehoused, reported, and managed to construct a more accurate profile of community members of the user community 150.

Evaluating the potential effectiveness of advertisements delivered to device users and user devices 122 is possible through the analysis of user feedback information provided by device users in reaction to received advertisements. The present invention provides an improved system that collects, compares, and incorporates the user feedback information collected via one or more transport structures that are served to the user devices 122 and the user community 150. The gathered metadata and any other information may be advantageously analyzed to gain a better understanding regarding the device users of community 150, and the effectiveness of various different advertisements.

The present invention thus improves the effectiveness of advertising and creates new opportunities to serve ads to user communities 150 or a collection of user communities 150 that serve common interests. There is also the potential to increase the number of target consumers and the overall effectiveness of advertisements via recommendations and referrals from these trusted members of user communities 150. The invention not only allows the consumer to save and share ads, but also provides a mechanism to provide feedback, edit, or annotate ads to suit the device user and the community's interests and tastes.

In certain embodiments, the present invention supports a process that automatically crawls online user communities that share common interests. The invention parses through user recommendations, digital conversations, and user reviews to generate and deliver personalized and trusted ads to individual device users and/or user communities 150 as a whole. If a device user views and likes an advertisement, the device user is then capable of forwarding positive feedback that affects ads sent to other members of their trusted user community 150.

This procedure may be further simplified by using buddy lists. The automated system scours user profiles of the trusted community 150, and then prompts the device users to share the advertisements. There may be mechanisms (e.g. the transport structures) to measure the effectiveness of these referrals and to incentivize both the sender and receiver of these advertisements. In certain embodiments, the present invention may identify influential community members. For example, influential community members may be identified by the frequency of "hits" (network contacts) on the influential community members. The present invention may then work with these "influencers" as trusted leadership in online user communities 150 to utilize their influence for enhancing the effectiveness of advertising messages. Additional details regarding the implementation and utilization of user communities 150 in the FIG. 1A distribution system 110 are further discussed below in conjunction with FIGS. 1B-8.

Referring now to FIG. 2A, a block diagram for one embodiment of a transport structure 210 is shown, in accordance with the present invention. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

In the FIG. 2A embodiment, transport structure (TS) controller 220 may include any appropriate type of information or instruction for providing intelligent functionality and control for transport structure. In certain embodiments, TS controller 220 may interact with, or be executed by, an external entity such as a processor of a user device 122 or a transport server from information service 118 (FIG. 1A).

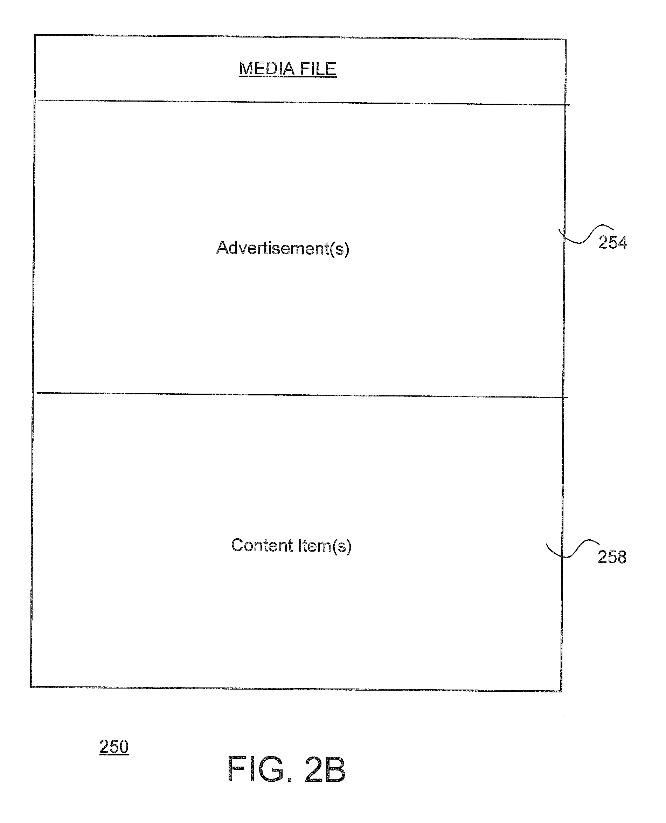

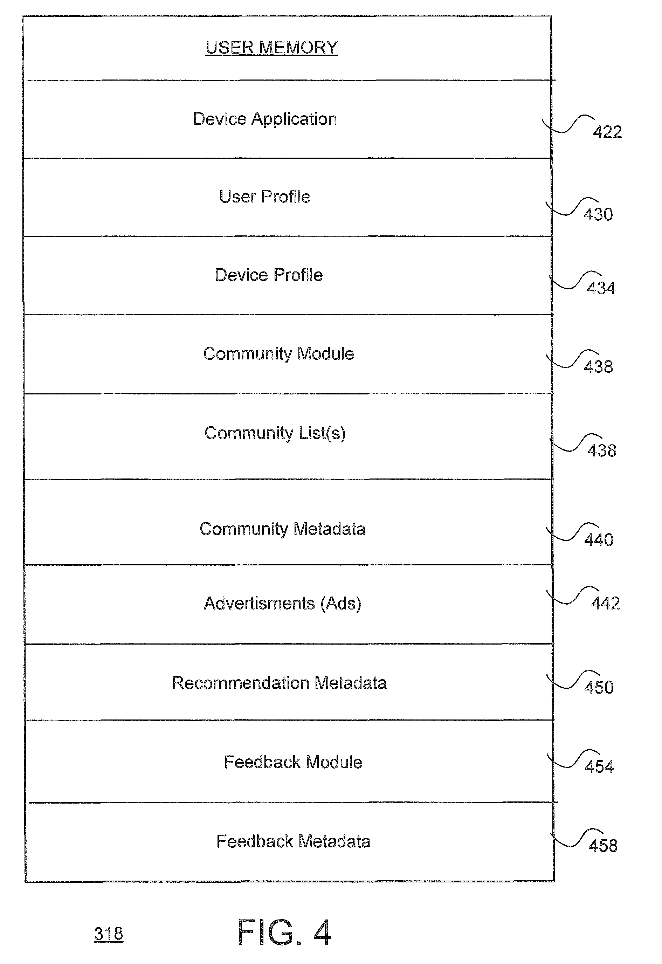

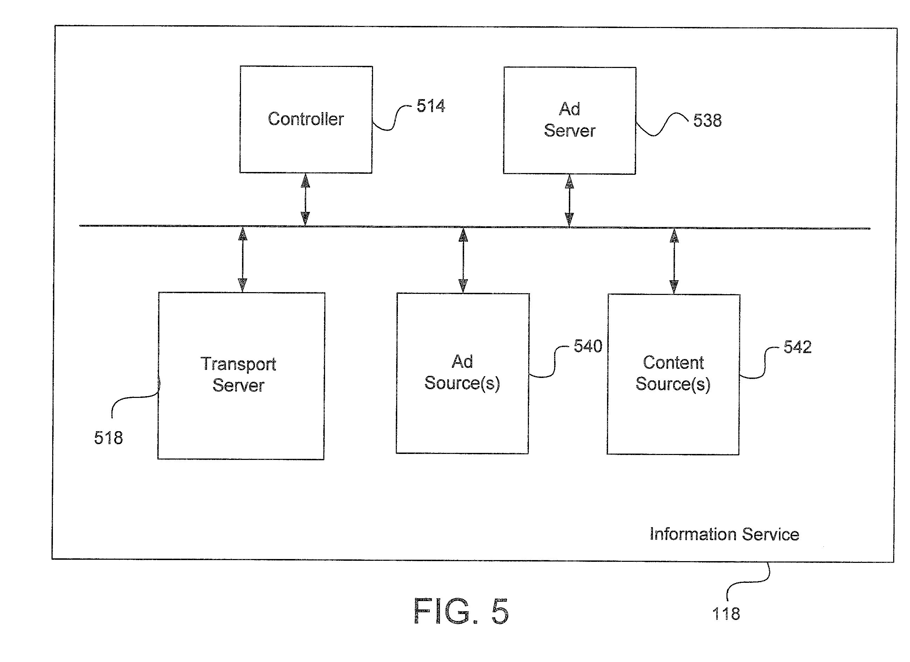

In the FIG. 2A embodiment, user metadata 222 may include information regarding one or more device users of user devices 122 (FIG. 1A). In certain embodiments, user metadata 222 may be selectively compiled from one or more appropriate user profiles 430 (see FIG. 4). Similarly, device metadata 226 may include information regarding one or more user devices 122. In certain embodiments, device metadata 226 may be selectively compiled from one or more appropriate device profiles 434 (see FIG. 4). In the FIG. 2A embodiment, advertiser metadata 234 may include information regarding one or more advertisers and/or advertisements that are associated with distribution system 110. In certain embodiments, the advertisers may be associated with ad sources 540 (see FIG. 5). Media link 246 may include appropriate information to indicate a location or a connection means for accessing one or more media files, as discussed below in conjunction with FIG. 2B.

In the FIG. 2A embodiment, community list(s) 238 may identify specific community members from one or more user communities 150 (FIG. 1B). In certain embodiments, a given community list 238 may include member names, member email addresses, and any other relevant information that specifically defines that particular user community 150. In the FIG. 2A embodiment, community metadata 240 may include any type of aggregated information regarding one or more user communities 150 from distribution system 110. In certain embodiments, community metadata 240 may include commonly-shared member characteristics, preferences, behaviors, locations, purchasing transaction histories, and advertising viewing histories.

In the FIG. 2A embodiment, feedback metadata 242 may include any types of information provided by device users in reaction to advertisements or other information received through distribution system 110 (FIG. 1). For example, feedback metadata 242 may include, but is not limited to, positive or negative feedback from device users regarding particular advertisements. In certain embodiments, feedback metadata 242 may also include user selections of specific members from one or more user communities 150 that the selecting device user feels are likely to find particular advertisements relevant or interesting.

Various entities in distribution system 110 may utilize the feedback metadata 242 and other metadata information in transport structure 210 in any appropriate manner. For example, advertisement targeting procedures may be performed by matching compatible elements of user metadata 222, device metadata 226, advertiser metadata 234, community metadata 240, and feedback metadata 242 to thereby identify appropriate types of relevant advertising information for automatic transmission to targeted device users.

In the FIG. 2A embodiment, recommendation metadata 248 may include any appropriate information regarding advertisement recommendations that are generated for targeted device users by analyzing community metadata 240, feedback metadata 242, advertiser metadata 234, and/or any other relevant types of information. For example, in certain embodiments, a user device 122 or a transport server of information service 118 may provide specific community member recommendations to a device user. These recommendations represent candidates from a user community 150 that would likely be interested in receiving a particular advertisement. The device user may then affirmatively choose to accept one or more of the community member recommendations.

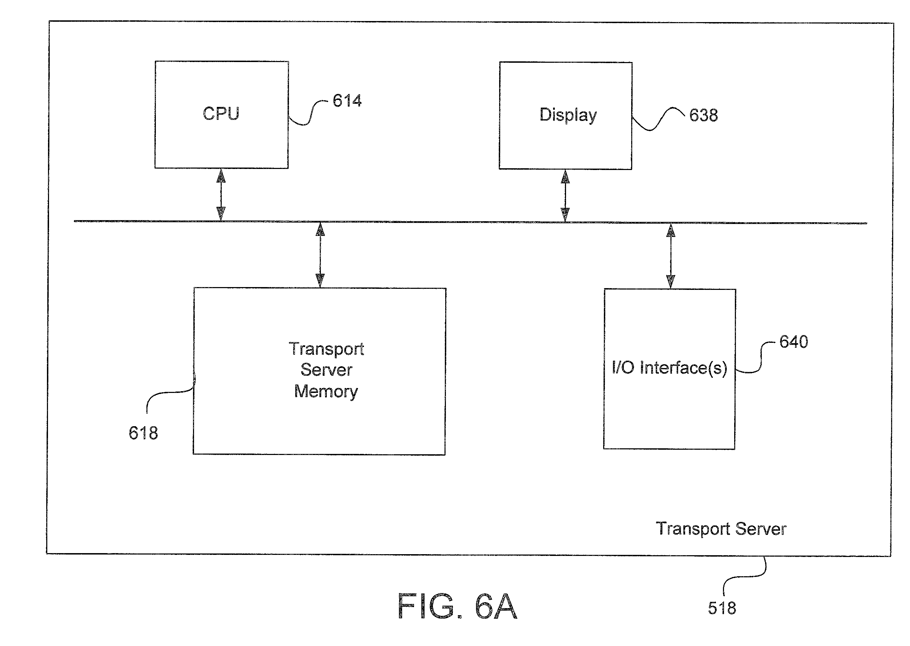

Transport structures 210 may be originated in any effective manner from any appropriate source. For example, transport structures 210 may be embedded in user devices 122 (FIG. 1A), and activated by device users if desired. Alternately, various entities in network 126 or information service 118 may create or activate transport structures 210. For example, a transport server (see FIG. 6A) may manage the origination and operation of transport structures 210. Further details regarding the implementation and utilization of the FIG. 2A transport structure 210 are discussed below in conjunction with FIGS. 2B-8.

Referring now to FIG. 2B, a block diagram for one embodiment of a media file 250 is shown, in accordance with the present invention. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

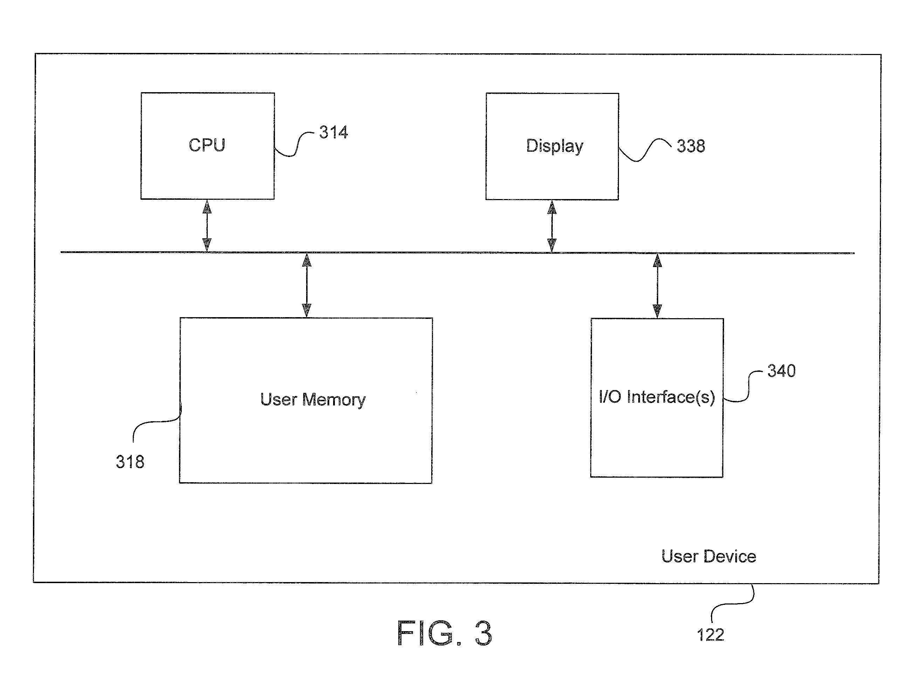

In the FIG. 2B embodiments, advertisements (ads) 254 may includes any appropriate type of targeted advertising information that has been selected for transmission to appropriate ones of the user devices 122 (FIG. 1A). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs. Further information for providing appropriate media files 250 to targeted device users is further discussed below in conjunction with FIGS. 3-8.

Referring now to FIG. 3, a block diagram for one embodiment of a FIG. 1A user device 122 is shown, in accordance with the present invention. In the FIG. 3 embodiment, user device 122 includes, but is not limited to, a central processing unit (CPU) 314, a memory 318, a display 338, and one or more input/output interface(s) (I/O inierface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-8.

Referring now to FIG. 4, a block diagram for one embodiment of the FIG. 3 user memory 318 is shown, in accordance with the present invention. In alternate embodiments, user memories 318 may be implemented by utilizing components and configurations in addition to, or instead of, certain of those components and configurations discussed in conjunction with the FIG**.** 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In the FIG. 4 embodiment, user memory 318 may include a user profile 430 and a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, and credit-card transaction records. Similarly, device profile 434 may include, but is not limited to, a device type, a device manufacturer, supported device functionalities, current and past geographic locations, and a device configuration.

In the FIG. 4 embodiment, user device 122 may utilize a community module 438 to create, update, edit, and otherwise manage one or more user communities 150 (FIG. 1B). In the FIG. 4 embodiment, community list(s) 438 may identify specific community members from one or more user communities 150. In certain embodiments, a given community list 238 may include member names, member email addresses, and any other relevant information that specifically defines that particular user community 150. In the FIG. 4 embodiment, community metadata 240 may include any type of aggregated information regarding one or more user communities 150 in distribution system 110. In certain embodiments, community metadata 440 may include commonly-shared member characteristics, preferences, behaviors, locations, purchasing transaction histories, and advertising viewing histories.

In the FIG. 4 embodiment, advertisements (ads) 442 may include targeted advertising information that has been received via distribution system 110 (FIG. 1A) specifically for a device user of user device 122. In the FIG. 4 embodiment, recommendation metadata 450 may include any appropriate information regarding advertisement recommendations that are generated for targeted device users by analyzing community metadata 440, feedback metadata 458, advertiser metadata 234 (FIG. 2A), and/or any other relevant types of information. For example, in certain embodiments, a user device 122 or a transport server of information service 118 may provide specific community member recommendations to a device user. These recommendations represent candidates from a user community 150 that would likely be interested in receiving a particular advertisement. The device user may then affirmatively choose to accept one or more of the community member recommendations.

In the FIG. 4 embodiment, user device 122 may utilize a feedback module 454 to generate and otherwise manage appropriate types of feedback metadata 458. In the FIG. 4 embodiment, feedback metadata 458 may include any types of information provided by device users in reaction to advertisements or other information received through distribution system 110 (FIG. 1). For example, feedback metadata 458 may include, but is not limited to, positive or negative feedback from device users regarding particular advertisements. In certain embodiments, feedback metadata 458 may also include user selections of specific members of one or more user communities 150 that the selecting device user feels are likely to find particular advertisements relevant or interesting. Feedback metadata 458 may be provided to one or more transport structures 210 (as feedback metadata 242 of FIG. 2A) for transmission to appropriate destinations in information distribution system 110.

Various entities in distribution system 110 may utilize the feedback metadata 242 and other metadata information in transport structure 210 in any appropriate manner. For example, advertisement targeting procedures may be performed by matching compatible elements of user metadata 222, device metadata 226, advertiser metadata 234, community metadata 240, and feedback metadata 242 (see FIG. 2A) to thereby identify appropriate types of relevant advertising information for automatic transmission to targeted device users. Further details regarding the implementation and utilization of the FIG. 4 user memory 318 are discussed below in conjunction with FIGS. 5-8.

Referring now to FIG. 5, a block diagram for one embodiment of the FIG. 1A information service 118 is shown, in accordance with the present invention. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2A), in accordance with the present invention. Additional details regarding the implementation and utilization of transport server 518 are further discussed below in conjunction with FIG. 6A. In the FIG. 5 embodiment, ad source(s) 540 may include one or more appropriate entities for providing advertisement information for dissemination through distribution system 110 (FIG. 1A). For example, ad sources 540 may include various commercial enterprises, specific advertisers, or advertising developers.

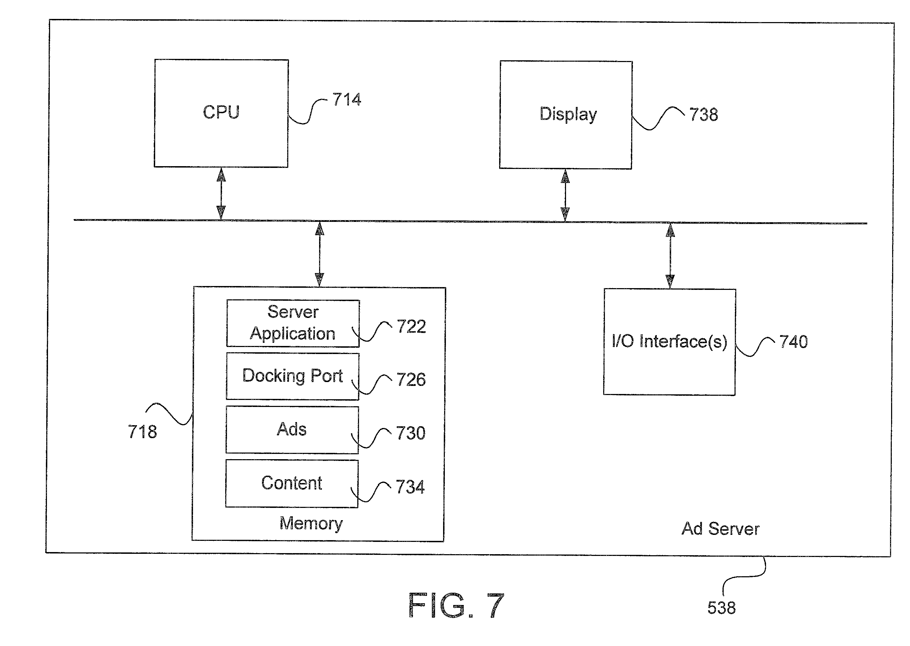

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1A) by utilizing metadata from one or more transport structures 210 (FIG. 2A). One embodiment of ad server 538 is further discussed below in conjunction with FIG. 7. Additional details for the implementation and utilization of information service 118 are further discussed below in conjunction with FIGS. 6A-8.

Referring now to FIG. 6A, a block diagram for one embodiment of the transport server 518 of FIG. 5 is shown, in accordance with the present invention. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

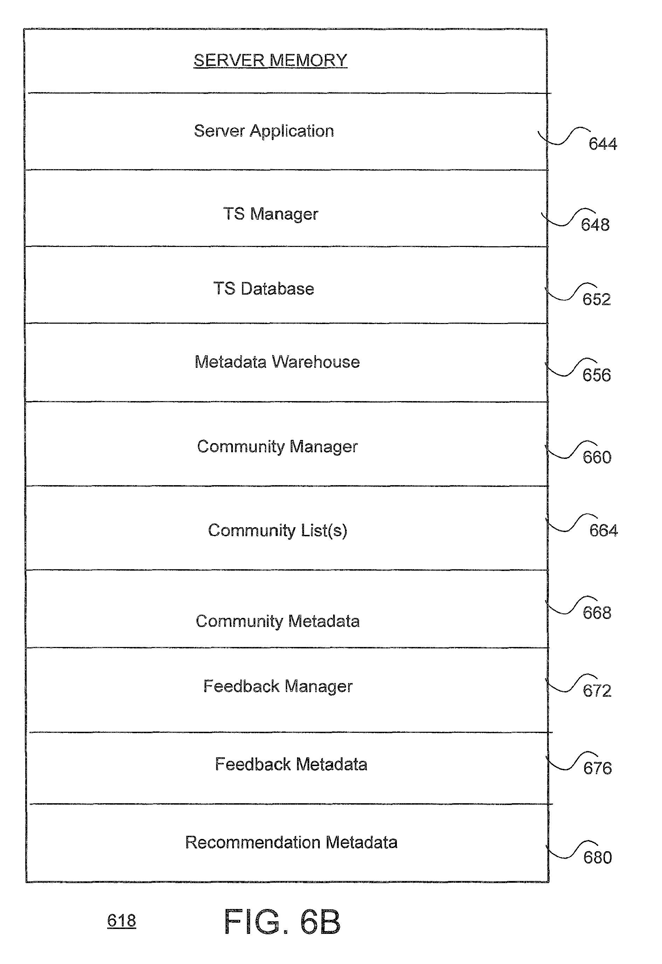

Referring now to FIG. 6B, a block diagram for one embodiment of the FIG. 6A transport server memory 618 is shown, in accordance with the present invention. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed below. For example, transport server memory 618 may include a server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A), in accordance with the present invention. In certain embodiments, the TS manager 648 may include a registration module for coordinating registration procedures to register device users of user devices 122 for participating in various authorized distribution services from distribution system 110 (FIG. 1A). The registration module may also be utilized to obtain information for defining a user community 150 (FIG. 1B), as previously discussed. A TS database 652 may include any appropriate information regarding the transport structures 210 that provide distribution services to various entities in distribution system 110.

In certain embodiments, the TS manager 648 may continually update respective transport structure information in the TS database 652 to reflect the current status of transport structures 210 in distribution system 110. In the FIG. 6B embodiment, transport server 518 may utilize metadata warehouse 656 to store any type of information or metadata for subsequent reference or utilization. For example, metadata warehouse 656 may include various sets of user metadata 222, device metadata 226, and advertiser metadata 234 received from one or more transport structures 210.

In the FIG. 6B embodiment, transport server 618 may utilize a community manager 660 to create, update, edit, and otherwise manage one or more user communities 150 (FIG. 1B) on behalf of certain device users in information distribution service 110. In the FIG. 6B embodiment, community list(s) 664 may identify specific community members from one or more user communities 150 in information distribution system 110. In certain embodiments, a given community list 238 may include member names, member email addresses, and any other relevant information that specifically defines that particular user community 150. In the FIG. 6B embodiment, community metadata 668 may includes any type of aggregated information regarding one or more user communities 150 in distribution system 110. In certain embodiments, community metadata 668 may include commonly-shared member characteristics, preferences, behaviors, locations, purchasing transaction histories, and advertising viewing histories.

In the FIG. 6B embodiment, transport server 618 may utilize a feedback manager 672 to handle and otherwise manage appropriate types of feedback metadata 676 received from various device users in information distribution system 110 via one or more transport structures 210. In the FIG. 6B embodiment, feedback metadata 676 may include any types of information provided by device users in reaction to advertisements or other information received through distribution system 110 (FIG. 1A). For example, feedback metadata 676 may include, but is not limited to, positive or negative feedback from device users regarding particular advertisements. In certain embodiments, feedback metadata 676 may also include user selections of specific members of one or more user communities 150 that the selecting device user feels are likely to find particular advertisements relevant or interesting.

Various entities in distribution system 110 may utilize the feedback metadata 676 and other metadata information from transport structure 210 in any appropriate manner. For example, advertisement targeting procedures may be performed by incorporating, analyzing, and matching compatible elements of community metadata 668, feedback metadata 676, and information from metadata warehouse 656 to thereby identify appropriate types of relevant advertising information for automatic transmission to targeted device users.

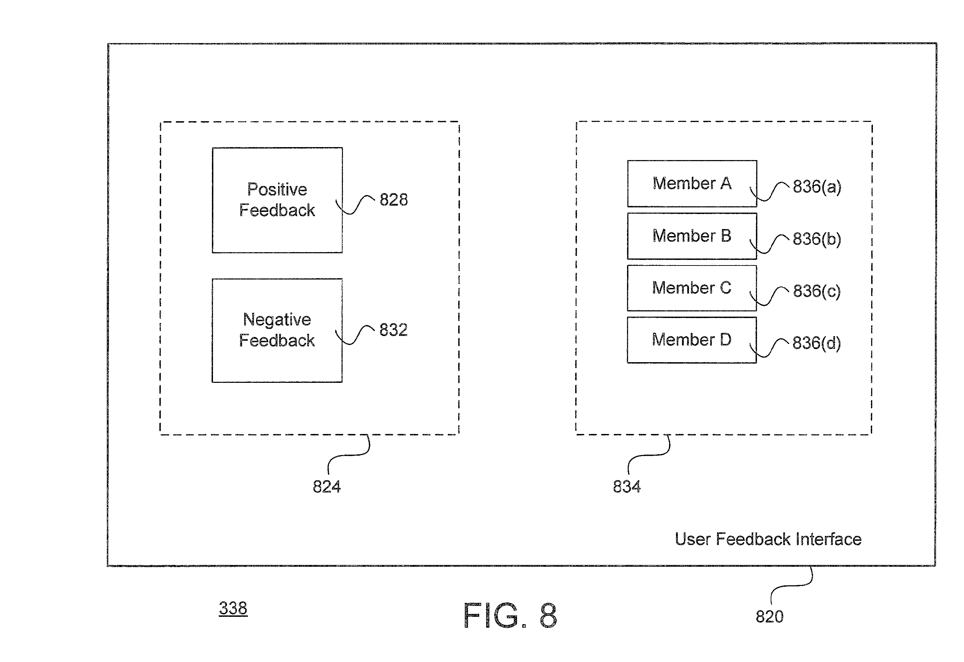

In the FIG. 6B embodiment, recommendation metadata 680 may include any appropriate information regarding advertisement recommendations that are generated for targeted device users by community manager 668 or other appropriate entity by analyzing community metadata 668, feedback metadata 676, any other relevant types of information from metadata warehouse 656. For example, in certain embodiments, transport server 618 may provide specific community member recommendations to various device users. These recommendations represent candidates from appropriate user communities 150 that would likely be interested in receiving a particular advertisement. After transmission to appropriate user devices 122, the corresponding device users may then choose to affirmatively accept one or more of the community member recommendations in recommendation metadata 680. The utilization of transport server 518 is further discussed below in conjunction with FIG. 8.

Referring now to FIG. 7, a block diagram for one embodiment of the ad server 538 of FIG. 5 is shown, in accordance with the present invention. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze information or instructions from transport server 518 or transport structures 210 to match appropriate media files 250 (FIG. 2B) with targeted device users of user devices 122 (FIG. 3).

In the FIG. 7 embodiment, docking port 726 may include any effective interface means for ad server 538 to bi-directionally communicate with one or more transport structures 210 (FIG. 2A) to transfer ads 730, content 734, or any other types of information. In the FIG. 7 embodiment, ads 730 include advertising information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

Referring now to FIG. 8, a diagram of an exemplary user feedback interface 820 is shown, in accordance with one embodiment of the present invention. The FIG. 8 embodiment is presented for purposes of Illustration, and in alternate embodiments, user feedback interfaces 820 may be implemented using components, functionalities, and configurations in addition to, or instead of, certain of those components, functionalities, and configurations discussed in conjunction with the FIG. 8 embodiment.

In the FIG. 8 embodiment, user feedback interface 820 may be presented on a display 338 of a user device 122 (FIG. 3) or any other appropriate entity. In the FIG. 8 embodiment, user feedback interface 820 includes a basic feedback window 824 that has a positive feedback button 828 and a negative feedback button 832. After viewing a particular advertisement, a device user may select positive feedback button 828 to indicate a positive impression regarding the advertisement. Similarly, the device user may select the negative feedback button 832 to indicate a negative impression regarding the advertisement. In certain embodiments, basic feedback window 824 may provide a ranked range of positive or negative feedback (for example, ranging from a low score of 1 to a high score of 10).

In the FIG. 8 embodiment, user feedback interface 820 also includes a member selection window 824 with a selected member list comprised of a series of members 836 from a user community 150 corresponding to the device user. The member list may be created in any effective manner. For example, the member list may be implemented as a default buddy list that is specifically created by the device user. Alternately, the member list may be automatically created in accordance with recommendation metadata 248 (FIG. 2A) that is generated by a community manager 660 (FIG. 6B) or any other appropriate entity after analyzing various relevant types of metadata pertaining to members of the user community 150. The device user may then select one or more community members 836 to generate feedback metadata 458 (FIG. 4) that indicates which of the listed community members are likely to find a particular advertisement relevant.

In the FIG. 8 embodiment, a user community 150 from information distribution network 110 may be initially defined by using any effective techniques. For example, in certain embodiments, members of a given user community 150 may be expressly designated by one or more device users. In addition, in other embodiments, a user community 150 may be automatically defined by analyzing relevant device user information. For example, selection factors such as common device user characteristics and behavior may be monitored and analyzed to define a given user community 150.

An information service 118 may then analyze collected metadata to prepare and send an advertisement to a targeted device user of a corresponding user device 122. In certain embodiments, the information service 118 or other appropriate entity may also provide recommendations indicating which other members of the user community 150 are likely to find the advertisement relevant. The device user then receives and view the transmitted advertisement.

In accordance with the present invention, the device user may then utilize user feedback interface 820 or other appropriate means to generate feedback metadata 458 regarding the viewed advertisements, as discussed above. The generated feedback metadata 458 may then be incorporated into other relevant metadata (such as user metadata 222, device metadata 226, and advertiser metadata 234) to more accurately and effectively target future advertisements to the device user and other members of the corresponding user community 150. For at least the foregoing reasons, the present invention therefore provides an improved system and method for effectively providing targeted information to a user community.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

Various respective aspects and features of the invention are defined in the appended claims. Combinations of features from the dependent claims may be combined with features of the independent claims as appropriate and not merely as explicitly set out in the claims.

## Claims

1. A system for implementing an information distribution network, comprising:
an information service that is configured to provide information distribution services through said information distribution network;
user devices that device users utilize to communicate with said information service for receiving selected information, a subset of said device users forming a user community with corresponding ones of said user devices; and
one or more feedback modules that said device users utilize to generate feedback metadata regarding said selected information, said feedback metadata being utilized to target said selected information to community members of said user community.

2. The system of claim 1 further comprising a transport structure that communicates with network entities in said information distribution network, said transport structure collecting targeting metadata for providing selected information from said information service to targeted ones of said device users, said targeting metadata including said feedback metadata.

3. The system of claim 1 wherein said selected information includes advertisements from one or more advertisers associated with said information distribution network.

4. The system of claim 1 wherein said feedback metadata includes general positive feedback from said community members that is provided through user feedback interfaces of said user devices, and wherein said general positive feedback is used to target corresponding advertisement types to said community members of said user community.

5. The system of claim 1 wherein said feedback metadata includes specific positive feedback from said community members that is provided through user feedback interfaces of said user devices, and wherein said specific positive feedback is used to target corresponding advertisement types to specifically selected ones of said community members of said user community.

6. The system of claim 5 wherein said specifically selected ones of said community members of said user community are chosen from a list of member recommendations that is automatically generated after analyzing community metadata relating to said user community.

7. The system of claim 1 wherein said user community represents a group of said community members that share one or more common characteristics, and wherein said user community is manually created by specific grouping selections from one or more of said community members.

8. The system of claim 1 wherein said user community represents a group of said community members that share one or more common characteristics, and wherein said user community is automatically created by a community manager by evaluating specific grouping factors from collected metadata.

9. The system of claim 1 wherein one of said user communities is initially defined by a manual creation procedure or an automatic creation procedure, said manual creation procedure being performed by a target member from said community members, said automatic creation procedure being automatically performed by a community manager by analyzing common characteristics and common behaviors of said device users.

10. The system of claim 9 wherein said information service analyzes collected metadata to prepare and send an advertisement to said target member, said target member then viewing said advertisement.

11. The system of claim 10 wherein said information service provides a recommendation list to said target member indicating which of said community members of said user community are likely to find said advertisement relevant.

12. The system of claim 11 wherein said target member utilizes a user feedback interface to generate said feedback metadata regarding said advertisement, said user feedback interface including a basic feedback window that has a positive feedback button and a negative feedback button, said user feedback interface also including a member selection window with said recommendation list.

13. The system of claim 12 wherein said feedback metadata is combined with user metadata, device metadata, and advertiser metadata to accurately target future advertisements to said community members of said user community.

14. The system of claim 1 wherein said information service identifies one or more influential members from said community members, said feedback metadata of said influential members being given an increased influence level when targeting said selected information.

15. A user device for use in a system for implementing an information distribution network according to any one of claims 1 to 14, comprising:
a device application that a device user utilizes to communicate with an information service for receiving selected information, said device user participating in a user community with corresponding community members; and
a feedback module that said device user utilizes to generate feedback metadata regarding said selected information, said feedback metadata being utilized to target said selected information to said community members of said user community.
